# EUROPÄISCHE PATENTSCHRIFT

(11) **EP 2 605 384 B1**
(45) Veröffentlichungstag und Bekanntmachung des Hinweises auf die Patenterteilung: **16.10.2019**
(21) Anmeldenummer: 12193080.4
(22) Anmeldetag: 16.11.2012
(51) Int. Cl.: H02K 15/095, H02K 3/32, H02K 15/10, H02K 3/18, H02K 3/38, H02K 5/22, H02K 15/00, H02K 11/25, H02K 1/14, H02K 15/12

(54) **Verfahren zum Wickeln der Feldspulen eines Stators sowie Stator**
Method for winding the field coils of a stator and this stator
Procédé pour enrouler des bobines de champ d'un stator, et ce stator

(30) Priorität: 14.12.2011 DE 102011088531
(43) Veröffentlichungstag der Anmeldung: 19.06.2013
(73) Patentinhaber: Metabowerke GmbH, 72622 Nürtingen (DE)
(72) Erfinder: Schmohl, Michael, 72119 Ammerbuch (DE); Flöte, Enrico, 72636 Frickenhausen-Linsenhofen (DE); Ebner, Felix, 73033 Göppingen (DE)
(74) Vertreter: Markfort, Iris-Anne Lucie

(56) Entgegenhaltungen:
- EP-A2- 0 411 275
- WO-A1-2008/072443
- GB-A- 2 430 085
- JP-A- 2000 050 554
- US-A- 5 664 317
- US-A1- 2006 097 602
- US-B1- 6 357 689

## Beschreibung

Die vorliegende Erfindung betrifft ein Verfahren zum Einlegen von Draht in Form von wenigstens einer Spule in einen Spulenraum eines Stators sowie einen Stator eines elektrischen Antriebs und eine Vorrichtung zur Herstellung eines solchen Stators.

Statoren werden in elektrischen Antrieben bzw. Elektromotoren eingesetzt, die neben dem Stator auch einen hierzu relativ bewegbaren Rotor umfassen. Eine übliche Anwendung solcher elektrischer Antriebe findet sich bei Haushaltsgeräten und Elektrowerkzeugmaschinen.

Ein Stator mit einem entsprechenden Rotor weist in der Regel einen Statorkörper mit einer geschlossenen Statorwand und paarweise daran angeordnete Polhörner bzw. Polspitzen auf. So sind an einem zweipoligen Stator beispielsweise vier Polhörner vorgesehen, die zu der Innenwand des Statorkörpers beabstandet an dieser angeordnet sind. Innerhalb dieser Polhörner ist der Rotor des elektrischen Antriebs angeordnet, welcher sich um eine Drehachse innerhalb des Stators relativ zu diesem rotatorisch bewegt. Der Statorkörper, welcher wie der Rotor üblicherweise aus eisenhaltigen Werkstoff (Eisen) hergestellt ist, weist einen Spulenraum auf, der eine Anzahl von Spulennuten, bei einem zweipoligen Stator vier Spulennuten, umfasst, die von den jeweiligen Polhörnern und der Statorwand begrenzt werden. In diese Spulennuten wird üblicherweise ein aus Kupfer bestehender Draht bzw. werden aus einem solchen gefertigte Feldspulen eingelegt.

Aufgrund des Aufbaus des Elektromotors wird der maximale Außendurchmesser des Rotors im Wesentlichen durch den Abstand der Polhörner voneinander bestimmt, während der Außendurchmesser des Stators die Baugröße des Elektromotors vorgibt.

Bei Elektrowerkzeugmaschinen, bei denen der Elektromotor in einem Gehäuseteil im Griffbereich des Anwenders angeordnet ist, wie zum Beispiel bei Winkelschleifern, Geradschleifern oder Polierern, kommt dem Durchmesser des Elektromotors eine besondere Bedeutung zu, da er einen direkten Einfluss auf den Griffdurchmesser und damit auf den Umfang des Griffteils hat. Gerade bei solchen Elektrowerkzeugmaschinen sollte der Umfang des Gehäuseteils, das den Handgriff bildet (das sogenannte Fadenmaß), für eine möglichst komfortable Handhabung der Elektrowerkzeugmaschine ein gewisses Maß nicht überschreiten. Aus diesem Grund ist es seit langem eine Aufgabe im Zusammenhang mit derartigen Elektrowerkzeugmaschinen, das Fadenmaß zu reduzieren. Gleichzeitig beeinflusst jedoch der maximale Außendurchmesser des Rotors maßgeblich die Leistung des Elektromotors, da dieser dem maximalen Hebelarm des Rotors entspricht und somit die Größe des abgegebenen Drehmoments des Elektromotors mitbestimmt.

Elektrische Antriebe mit einem Stator sowie einem darin angeordneten Rotor sind in der Regel luftgekühlt, wobei Umgebungsluft in den elektrischen Antrieb eingesaugt und durch diesen hindurch gezogen wird. Die durch den elektrischen Antrieb hindurchströmende Luft führt die Wärme von dem Kupferdraht der Feldspule(n) ab und stellt dabei sicher, dass der elektrische Antrieb ausreichend Leistung abgeben kann ohne zu überhitzen.

Grundsätzlich fallen in einem elektrischen Antrieb verschiedene Arten von Verlusten an, die in Summe die Verlustleistung bilden, welche die zur Verfügung stehende Nutzleistung des Antriebs verringert. Neben der gewünschten Leistung sind es folglich die Verluste (und die zulässige Erwärmung) eines elektrischen Antriebs, welche seine Größe, d.h. dessen Abmessungen bestimmen. Allgemein lassen sich die Verluste in materialabhängige Verluste (Kupferverluste, Eisenverluste) und materialunabhängige Verluste unterteilen, wobei letztere vornehmlich von der Konstruktion des Antriebs abhängen. So ist es beispielsweise notwendig, Reibungsverluste innerhalb des Antriebs möglichst gering zu halten. Zudem können Strömungsverluste einer Luftströmung innerhalb des Antriebs die Luftkühlung und somit die Leistung verringern.

Eine entscheidende Anforderung, die seit Jahren an den elektrischen Antrieb von beispielsweise Elektrowerkzeugmaschinen gestellt wird, besteht darin, zunehmend höhere Leistungen bei gleichbleibender Gerätegröße oder bei einer gleichzeitigen Reduktion der Gerätegröße zu bieten.

Als Nachteil in Zusammenhang mit der Luftkühlung elektrischer Antriebe hat sich in der Praxis gezeigt, dass in der Kühlungsluft oftmals Staubpartikel enthalten sind, die an dem Spulendraht angreifen und im Betrieb der elektrischen Antriebs zu einer Abrasion des Spulendrahts führen können.

Um diesem Problem zu begegnen ist es aus der Praxis bekannt, handeingelegte, vorgewickelte Spulen vor dem Einlegen in den Spulenraum mit einer Bandage und/oder Isolierpapier zu umwickeln. Dabei ist jedoch dieser zusätzliche Arbeitsschritt des Umwickelns der vorgewickelten Spule äußerst aufwendig und somit sowohl zeit- also auch kostenintensiv bei der Herstellung. Weitere Nachteile von handeingelegten, vorgewickelten Spulen ergeben sich aus dem ebenfalls kosten- und zeitintensiven Schritt des Handeinlegens der Spule in den Spulenraum und aus dem Umstand, dass der Spulenraum bei handeingelegten Spulen niemals vollständig ausgenutzt werden kann, da stets ein geringer Spalt zwischen der Spulennut und der eingelegten vorgewickelten Spule verbleibt.

Alternativ wird der Spulenraum eines Statorkörpers direkt mit Spulendraht bewickelt, vorzugsweise mit Hilfe einer Nadelwickelmaschine oder dergleichen, da hierdurch eine höhere Packungsdichte des Spulendrahts in dem Spulenraum erreicht wird und weiterhin eine Schnellbewicklung erfolgen kann.

Ein solches automatisiertes Verfahren zum Einlegen von Kupferdraht in Form einer Feldspule in den Spulenraum zwischen Polhörnern und Statorwand eines zweipoligen Stators ist beispielsweise aus dem Dokument EP 1 225 679 A1 bekannt.

Weiterhin ist gemäß der Norm DIN EN 60745 ein elektrischer Sicherheitsabstand zwischen einem aktiven Teil Eisen und einem Spulendraht von mindestens 2 mm gefordert. Daher ist es notwendig, bei jedem Elektromotor zu gewährleisten, dass die Luftstrecke zwischen dem Spulendraht sowohl zum Stator als auch zum darin aufgenommenen Rotor wenigstens 2 mm beträgt.

Aus dem Stand der Technik, der Druckschrift US 5664317 A, ist ein Verfahren bekannt, bei dem über die Polhörner des Stators hinausgewickelt werden kann, indem während des Bewickelns zusätzliche Wickelschulterteile an die Polhörner angelegt werden, die die Windungen des Spulendrahts abstützen.

Um den Spulenraum des Statorkörper möglichst effektiv zu nutzen, schlägt die Druckschrift JP 2000050554 A ferner vor, Isolationspapier zwischen Spule und Statorkörper vorzusehen, das über die Endflächen des Statorkörpers vorsteht. Die EP 0411275 A2 zeigt Isoliermittel, die über die Polhörner vorstehen.

Die Druckschrift US 6357689 B1 beschreibt ferner eine Anordnung, mit deren Hilfe die Windungen einer gewickelten Spule eines Statorkörpers mit einander verriegelt werden können.

In der Druckschrift GB 2430085 A ist ein mehrteiliger Statorkörper beschrieben, bei dem die vorgewickelten eingelegten Spulenkörper über die Polhörner hinaus vorstehen können. Schließlich offenbart die US 2006097602 A1 eine Motoranordnung, bei der eine erste und zweite vorgewickelte Spule vollständig mit einem thermohärtendem Harz bedeckt sind, welches die Spule elektrisch isoliert und eine hohe Wärmeleitfähigkeit aufweist. Die Spulen werden mit Hilfe des Harzes zudem fest mit dem Statorkörper verbunden, nachdem dieses in die Form, in welcher Statorkörper und Spulen aufgenommen sind, eingegossen wurde.

Um einerseits sowohl einen zuverlässigen kostengünstig anzubringenden Abrasionsschutz als auch den geforderten elektrischen Sicherheitsabstand bereitzustellen, schlägt die vorliegende Erfindung ein Verfahren zum automatisierten Einlegen von Draht in Form von wenigstens einer Spule in einen Spulenraum eines Stators mit den Merkmalen des Anspruchs 1 vor, wobei das Einlegen des Spulendrahtes automatisiert mithilfe eines torierenden Wickelarms erfolgt, wobei der Spulenraum eine Anzahl von Spulennuten umfasst, die von Polhörnern und Statorwand des Stators begrenzt werden, wobei ein Isolierpapier vorgesehen wird, um die wenigstens eine Spule vor Abrasion zu schützen.

Erfindungsgemäß umfasst das Verfahren die Schritte Einlegen des Isolierpapiers in den Spulenraum in der Weise, dass das Isolierpapier aus der jeweiligen Spulennut heraus in eine Richtung senkrecht zu der Längsachse des Stators über das jeweilige Polhorn vorsteht, und Einlegen des Spulendrahts in den Spulenraum, Fixieren einzelner Windungen des Spulendrahtes mittels eines Fixierungsmittels aneinander, wobei der Spulendraht eine Backlackbeschichtung als Fixierungsmittel aufweist, mittels der einzelne Drahtwindungen zu einer Spule verbacken werden, und Fixieren des senkrecht zu der Längsachse des Stators überstehenden Teils des Isolierpapiers an der Spule, wobei der senkrecht zu der Längsachse des Stators überstehende Teil des Isolierpapiers an der Spule angebacken wird.

Wie im Stand der Technik gezeigt, kann der Spulenraum des Stators bei der vorliegenden Erfindung eine Anzahl von Spulennuten, beispielsweise im Falle eines zweipoligen Stators vier Spulennuten, umfassen. Die Rotationsachse eines zugehörigen Rotors ist parallel zu der Längsachse des Stators, wobei nachfolgend mit der Bezeichnung "Längsachse" auf die Mittellängsachse des Stators Bezug genommen wird, die in der Regel mit der Rotationsachse des Rotors zusammenfällt. Bevor der entsprechende Spulendraht in den Spulenraum des Stators eingelegt wird, wird Isolierpapier, beispielsweise in Streifenform, in den Spulenraum in der Weise eingelegt, dass dieses aus der jeweiligen Spulennut heraus in eine Richtung senkrecht zu der Längsachse des Stators über das jeweilige Polhorn vorsteht.

Dieser Überstand des Isolierpapiers über das jeweilige Polhorn hinaus, bietet einen Abrasionsschutz eines in einem weiteren Schritt eingelegten Spulendrahts in den Spulenraum. Weiterhin ermöglicht das überstehende Isolierpapier eine elektrische Isolation des Spulendrahts gegenüber dem Stator und dem innerhalb des Stators aufgenommenen Rotors. So kann der gemäß DIN EN 60745 geforderte elektrische Sicherheitsabstand von einem aktiven Teil, wie dem Rotor oder Stator, zu einem elektrischen Draht, wie dem Spulendraht, von mindestens 2 mm Luftstrecke eingehalten werden, auch wenn der eingelegte Spulendraht über den verfügbaren Spulenraum hinaus vorsteht, d. h. bei einem Füllgrad von mehr als 100 % in den Spulennuten. In der Praxis war dies bislang regelmäßig nur mit Hilfe einer Bandage um eine vorgewickelte Feldspule oder durch einen geringeren Außendurchmesser des Rotors erreichbar. Letzteres hat eine geringere Leistung des elektrischen Antriebs zur Folge, während erstere Maßnahme, wie bereits vorstehend ausgeführt ist, kosten- und zeitintensiv ist.

Durch das Hochziehen des Isolierpapiers über die Polhörner hinaus kann mit Hilfe des erfindungsgemäßen Verfahrens jedoch die für die elektrische Isolation relevante Luftstrecke vergrößert werden, so dass der elektrische Sicherheitsabstand gemäß DIN EN 60745 eingehalten werden kann.

In einer Weiterentwicklung der vorliegenden Erfindung kann das Isolierpapier in einem Bereich von wenigstens 2 mm, vorzugsweise in einem Bereich von 5 mm bis 15 mm, aus der jeweiligen Spulennut heraus über das jeweilige Polhorn vorstehen.

Bei einer bevorzugten Ausführungsform kann während des Einlegens des Spulendrahts in den Spulenraum der vorstehende Teil des Isolierpapiers nach radial innen gezogen werden, um das Einlegen des Spulendrahts nicht zu behindern. Dabei bezeichnet nach radial innen eine Richtung, die auf die Mittellängsachse des Stators bezogen ist, d. h. eine Richtung von dem Spulenraum weg. Auf diese Weise kann der Statorkörper wie üblich bewickelt werden, ohne dass das Risiko besteht, dass das Isolierpapier beim Wickelvorgang nach innen verknickt wird.

Gemäß einer ersten Ausführungsform kann das Fixierungsmittel auf den eingelegten Spulendraht aufgebracht werden und das Isolierpapier in Anlage an dem Fixierungsmittel an dem eingelegten Spulendraht fixiert werden. Dabei ist es grundsätzlich möglich, das Fixierungsmittel noch vor dem Aufwickeln des Spulendrahts auf diesen aufzubringen oder alternativ dieses erst auf die fertig gestellte bzw. aufgewickelte Feldspule aufzubringen.

Alternativ oder zusätzlich kann das Isolierpapier wenigstens teilweise mit dem Fixierungsmittel beschichtet sein. Auch hier sind beide Möglichkeiten denkbar, d. h., dass das Isolierpapier bereits vor dem Einlegen in den Spulenraum mit dem Fixierungsmittel beschichtet worden ist, oder dass das Fixierungsmittel erst nach dem Einlegen des Isolierpapiers in den Spulenraum auf dieses aufgetragen wird.

Grundsätzlich ist es sowohl denkbar, nur in einem bestimmten Bereich ein Fixierungsmittel aufzubringen als auch den gesamten Abschnitt der aufgewickelten Feldspule bzw. des Spulendrahts oder des Isolierpapiers mit Fixierungsmittel zu beschichten.

Ferner kann das Isolierpapier in gleicher Weise zusätzlich oder alternativ an dem Statorkörper angebracht werden. Dabei sieht eine vorteilhaft Ausgestaltung der Erfindung vor, dass das Isolierpapier zumindest abschnittsweise mit dem Fixierungsmittel beschichtet ist und durch Einlegen in eine der Spulennuten eines zumindest im Bereich des Spulenraums erwärmten Statorkörpers in der Spulennut stoffschlüssig fixiert werden kann.

Weiterhin kann der Stator mehrere im Querschnitt betrachtet segmentförmige Teile umfassen, wobei in jedem der Statorsegmente Isolierpapier sowie ein Spulendraht eingelegt werden, wobei in einem weiteren Schritt die Statorsegmente miteinander verbunden werden, wobei vorzugsweise die Statorsegmente mit einem zusätzlichen Verbindungsmittel stoffschlüssig miteinander verbunden werden, wobei das zusätzliche Verbindungsmittel Klebstoff, Träufelharz oder Backlack umfassen kann.

Im Sinne der vorliegenden Beschreibung der Erfindung bezeichnet der Querschnitt eine Schnittebene, die senkrecht zu der Längsachse der Stators ist. Die Statorsegmente bilden zusammen einen im Wesentlichen im Querschnitt betrachtet kreisförmigen Statorkörper, wobei die wenigstens zwei Statorsegmente beispielsweise halbkreisförmig sein können.

Je nach Gestaltung des Statorkörpers können jedoch auch mehr als zwei Statorsegmente vorgesehen sein, beispielsweise drei, vier, fünf oder mehr, die gemeinsam den Statorkörper bilden können. Diese können gleich große oder unterschiedlich große Statorsegmente umfassen, wobei unter Berücksichtigung der Herstellkosten mehrere Gleichteile vorteilhaft sind.

Die vorliegende Erfindung betrifft ferner einen Stator eines elektrischen Antriebs mit den Merkmalen des Anspruchs 8

Der erfindungsgemäße Stator kann ferner mit dem vorstehend beschriebenen Verfahren hergestellt sein.

Schließlich soll auch eine Vorrichtung nach Anspruch 10 zur Herstellung eines Stators mit den vorstehenden Merkmalen geschützt sein, umfassend eine Vorrichtung zum Einlegen von Isolierpapier in den Spulenraum, wobei beim Einlegen des Isolierpapiers sichergestellt ist, dass das Isolierpapier aus der jeweiligen Spulennut heraus in einer Richtung senkrecht zu der Längsachse des Stators über das jeweilige Polhorn vorsteht.

Die Erfindung wird nachfolgend unter Bezugnahme auf die beigefügten Figuren detaillierter beschrieben.

Die beigefügten Figuren zeigen beispielhaft eine bevorzugte Ausführungsform, bei der die einzelnen Merkmale der Erfindung miteinander kombiniert sind. Der Fachmann wird diese jedoch selbstverständlich auch losgelöst voneinander betrachten und/ oder zu anderen sinnvollen Kombinationen zusammenfassen können.

Es zeigen schematisch:
- Figur 1: eine isometrische Ansicht eines zweipoligen Stators;
- Figur 2: einen Querschnitt senkrecht zu der Längsachse des Stators der Figur 1;
- Figur 3: eine Draufsicht auf eine Statorhälfte des Stators gemäß Figuren 1 und 2;
- Figur 4: eine Detailansicht einer Verbindungsstelle eines Stators gemäß Figuren 1 und 2;
- Figur 5a: eine Detailansicht einer Statorhälfte mit einem Temperatursensorelement in einer ersten Ausführungsform;
- Figur 5b: eine Detailansicht einer Statorhälfte mit einem Temperatursensorelement in einer zweiten Ausführungsform;
- Figur 6: eine Wickelschablone, welche bei einem Wickelvorgang eines erfindungsgemäßen Stators verwendet werden kann;
- Figur 7: in einer Ansicht von der Außenseite her eine in eine Statorhälfte eingesetzte Wickelschablone nach einem Wickelvorgang;
- Figur 8: in einer isometrischen Ansicht einen mit einer Beschichtung versehenen Stator; und
- Figur 9: eine Schnittdarstellung des in Figur 8 gezeigten Stators.

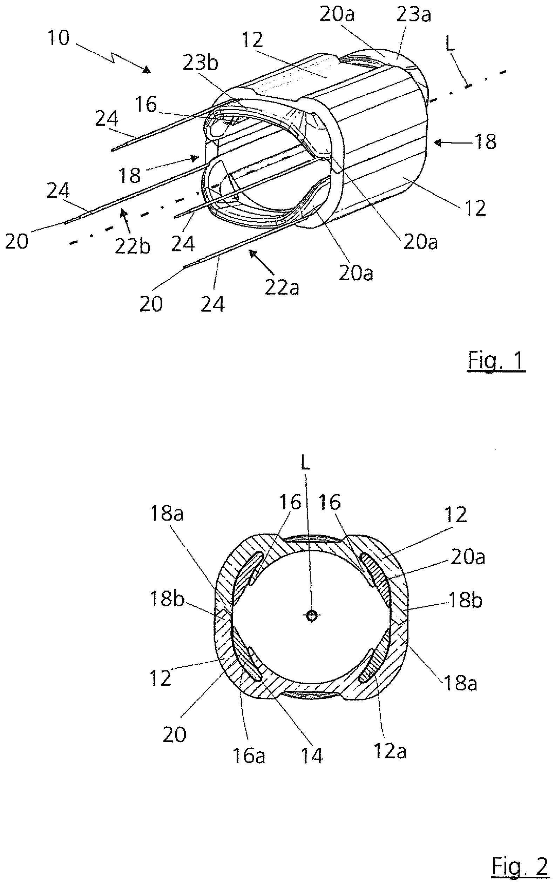

In der Figur 1 ist ein zweipoliger Stator eines elektrischen Antriebs gezeigt und allgemein mit dem Bezugszeichen 10 bezeichnet. Dieser zweipolige Stator umfasst einen Statorkörper, welcher im Bereich einer sich entlang einer Längsachse L des Stators erstreckenden Trennungsebene in zwei Statorsegmente bzw. Statorhälften 12 geteilt ist. Die beiden Statorhälften 12 sind dabei als identische Teile ausgebildet, was die Herstellung des Statorkörpers besonders einfach macht. In üblicher Weise ist der dargestellte Statorkörper des Stators 10 durch Stanzpaketieren von identischen Blechlamellen zu einem Blechpaket hergestellt.

Weiterhin umfasst jede der Statorhälften 12 zwei Polhörner bzw. Polspitzen 16 (vgl. auch Fig. 2), die sich von der Innenumfangsfläche 12a der jeweiligen Statorhälfte 12 nach innen erstrecken und somit den Innenraum des Stators 10 für einen darin aufzunehmenden Rotor (nicht dargestellt) begrenzen.

Die beiden Statorhälften 12 sind im Bereich zweier Verbindungsstellen 18 miteinander verbunden, wobei jede Statorhälfte 12 eine erste Verbindungsstelle 18a sowie eine zweite Verbindungsstelle 18b aufweist.

Weiterhin sind in Figur 1 Endabschnitte bzw. Drahtenden 22a und 22b eines spulenförmig, d.h. in der Form einer Spule 20a mit einer Wicklungsstruktur und Wickelköpfen 23a und 23b, eingelegten Spulendrahts 20 zu erkennen. Wie aus Figur 1 ersichtlich, sind die Drahtenden 22a, 22b als Anschlussdrähte jeweils mit einem Schrumpfschlauch 24 als Schlauchelement versehen, welches nicht außerhalb des Stators 10 endet, sondern in den Stator 10 eingeschoben ist, d.h. in die Wicklungsstruktur der Spule 20a hineinragt, um eine optimale Isolierung zu erreichen und einen Schutz vor leitfähigen Ablagerungen zu erhalten. Als Schlauchelemente kommen auch Glasgewebeschläuche in Betracht.

In anderen Ausführungsbeispielen könnte statt des Schlauchelements auch ein Hülsenelement vorgesehen sein.

Wie in Figur 2 deutlich zu erkennen ist, wird die erste Verbindungsstelle 18a der beiden Statorhälften 12 jeweils durch eine entlang der Längsachse L verlaufende dreieckförmige Nut 18a gebildet, während die zweite Verbindungsstelle 18b durch einen korrespondierenden entlang der Längsachse L verlaufenden dreieckförmigen Vorsprung 18b gebildet ist. Durch die spezielle Ausbildung der ersten und zweiten Verbindungsstelle 18a und 18b kann eine einfache Herstellung der Verbindungsstellen 18 ermöglicht werden.

Weiterhin wird durch die Ausprägung der ersten und zweiten Verbindungsstellen 18a und 18b eine Ausrichtung der Statorhälften 12 zueinander erreicht, wenn die jeweils korrespondierende erste Verbindungsstelle 18a mit der zweiten Verbindungsstelle 18b in Anlage gebracht wird. Schließlich kann durch diese spezielle Ausgestaltung der Verbindungsstellen 18 gewährleistet werden, dass die Statorhälften 12 bei der Herstellung des Statorkörpers in direkter Anlage zueinander aus dem Material ausgestanzt werden können, was zu einem geringeren Anfallen von Verschnitt gegenüber dem Stand der Technik führt.

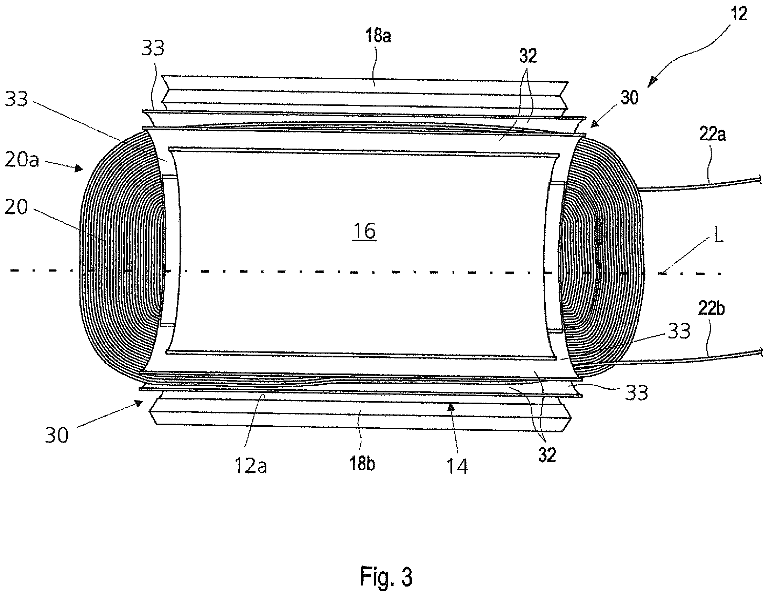

In Figur 2 ist ebenfalls deutlich gezeigt, dass die Statorinnenwand 12a und die radial äußere Wand 16a der Polhörner 16 eine Nut 14 begrenzen, in welche der aus Kupfer hergestellte Spulendraht 20 aufgenommen werden kann. Wie in den Figuren (vgl. insbesondere Figuren 2 und 3) zu erkennen ist, wird der Spulendraht 20 in der Form einer Spule 20a in den durch die Nuten 14 einer Statorhälfte 12 ausgebildeten Spulenraum eingelegt.

In Figur 2 ist weiterhin gezeigt, dass der eingelegte Spulendraht 20 nicht wie in der Praxis üblich mit einem Füllgrad von weniger als 100 % in die Nut 14 eingelegt ist, sondern über die Nut 14 hinaus gewickelt ist. Darin ist eine Besonderheit der vorliegenden Erfindung zu sehen, da durch einen Füllgrad von mehr als 100 % eine erhöhte Leistung eines Elektromotors mit einem derart gewickelten Stator 10 gegenüber einem Elektromotor mit einem konventionell gewickelten Stator erreicht werden kann. Insbesondere ermöglicht es die in Figur 2 gezeigte Wicklungsform, insgesamt mehr Spulenwindungen in einem hohlzylindrischen Volumenelement (welches sich zwischen den Statorhälften und der Außenseite eines Ankers befindet) anzuordnen als nach dem Stand der Technik möglich. Bei gleichem beanspruchtem Bauraum kann so insgesamt mit der Spule 20a ein höherer magnetischer Fluss erzeugt werden und damit eine höhere Leistung des Elektromotors erreicht werden. Ebenso kann für eine gegebene Anzahl von Windungen die Spule 20a erheblich flacher ausgelegt werden als bisher nach dem Stand der Technik möglich, so dass bei gleicher Windungszahl ein Anker höheren Durchmessers verwendet werden kann. Damit ergibt sich gegenüber dem Stand der Technik ein höheres Drehmoment auf die Ankerwicklungen, was im Ergebnis ebenfalls zu einer Leistungssteigerung führt. Ebenso kann bei gleichbleibender Leistung eine Verkleinerung des Elektromotors und damit eine Verringerung des Fadenmaßes eines zugehörigen Elektrohandwerkzeuges erreicht werden.

Da in dem über die Nut 14 hinausgehenden Bereich die mechanisch stabilisierende Wirkung der Polhörner 16 wegfällt, sind zusätzliche Maßnahmen erforderlich, um zu gewährleisten, dass die Spule ihre Form beibehält und sich die Wicklungen nicht voneinander lösen.

Hierzu ist eine zumindest teilweise stoffschlüssige Verbindung der Windungen der Spule 20a untereinander mindestens in Teilen des außerhalb der Nut 14 befindlichen Bereiches der Spule 20a vorteilhaft. Diese stoffschlüssige Verbindung kann beispielsweise unter Verwendung eines Backlackdrahtes verwirklicht werden. Unter einem Backlackdraht wird ein Spulendraht verstanden, der eine temperaturfeste Grundisolation und eine durch Erhitzen verklebende, oft auch dabei polymerisierende Deckschicht aufweist. Zusätzlich oder alternativ kann die stoffschlüssige Verbindung auch mittels eines Träufelharzes geschaffen werden, welches aufgrund der Kapillarwirkung der Zwischenräume zwischen den Windungen in der Spule 20a die Spule 20a nach einem Eintauchen praktisch vollständig durchdringt.

Wie in Figur 3 gezeigt ist, umfasst der zweipolige Stator 10 mit seinen beiden Statorhälften 12 nicht nur einen durch die Statorhälften 12 gebildeten Statorkörper, der mit Spulendraht 20 bewickelt ist, sondern auch Isolierpapier 30, das in die Nuten 14 eingelegt wird, ehe der Spulendraht 20 auf die jeweilige Statorhälfte 12 aufgewickelt wird.

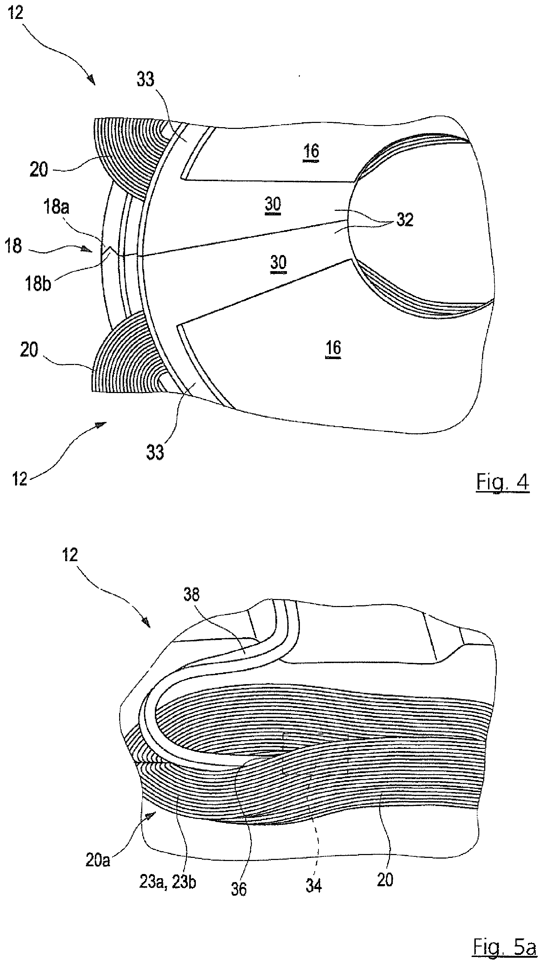

Das Isolierpapier 30 dient dazu, die durch den Spulendraht 20 gebildete Spule 20a im Betrieb eines den Stator 10 aufweisenden Elektromotors vor Abrasion zu schützen und elektrisch gegenüber dem Statorkörper sowie dem benachbarten Rotor (nicht gezeigt) zu isolieren. So ist gemäß der Norm DIN EN 60745 ein Mindestabstand von 2 mm Luftstrecke zwischen einem aktiven Teil, wie dem Statorkörper oder dem Rotor, und dem Spulendraht sicher zu stellen um eine elektrische Isolation zu gewährleisten. Diese wird bei dem vorstehend angesprochenen Füllgrad des Spulendrahts 20 über 100 % dadurch sichergestellt, dass das Isolierpapier 30 mit einem radialen Überstand 32 (vgl. auch Figur 4) über die jeweiligen Polhörner 16 hinaus vorgesehen ist.

Als radialer Überstand 32 wird der Teil des Isolierpapiers 30 verstanden, der bezogen auf die Längsachse L radial, d.h. in einer Richtung senkrecht zu der Längsachse L, über die Polhörner 16 übersteht.

Dabei kann der Überstand 32 des Isolierpapiers 30, wie in Figur 4 gezeigt, derart gewählt sein, dass zumindest die radial innenliegenden Abschnitte des überstehenden Isolierpapiers 32 dann, wenn die Statorhälften 12 zusammengesetzt sind, d. h. im Bereich ihrer Verbindungsstellen 18 aneinander anliegen, die Überstände 32 des Isolierpapiers 30 der beiden Statorhälften 12 ebenfalls aneinander anliegen bzw. sich überlappen. Zudem kann, wie in Figur 3 zu erkennen ist, auch ein (bezogen auf die Längsachse L des Stators 10) axialer Überstand 33 des Isolierpapiers 30 sinnvoll sein, um den elektrischen Sicherheitsabstand von 2 mm Luftstrecke zwischen Spulendraht und aktivem Eisen zu gewährleisten. Als axialer Überstand 33 wird der Teil des Isolierpapiers 30 verstanden, der bezogen auf die Längsachse L axial, d.h. in einer Richtung parallel zu der Längsachse L, über die Polhörner 16 übersteht.

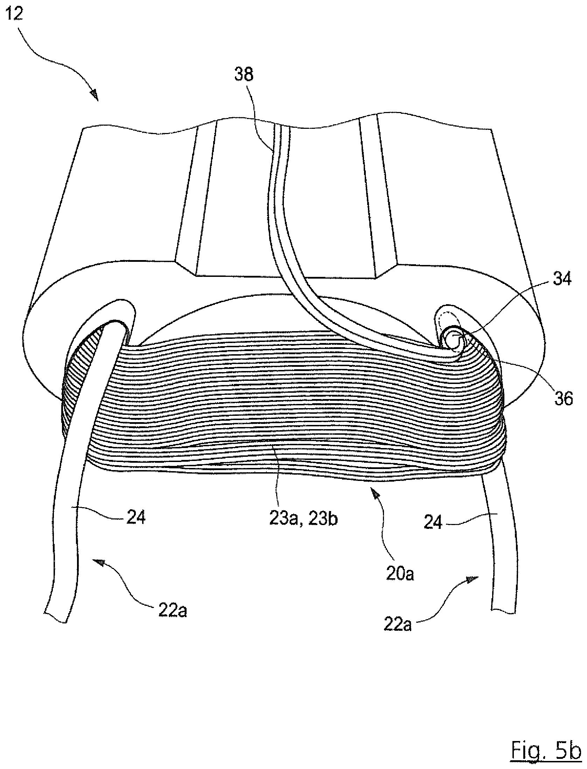

Wie aus Figur 5a ersichtlich, ist ein gestrichelt angedeutetes Temperatursensorelement 34 in einer Aussparung bzw. einem Hohlraum 36 in der Wicklungsstruktur der Spule 20a vorhanden, um die Temperatur der Spule 20a bzw. des Spulendrahts 20 während des Betriebs zu erfassen. Das Temperatursensorelement 34 ist wenigstens annähernd vollständig von der Spule 20a umgeben, so dass in Figur 5a lediglich die Anschlussleitungen 38 aus der Spule herausragen. Das Temperatursensorelement 34 kann nur in eine oder auch in beide Statorhälften 12 eingebracht werden. Wie aus Figur 5b ersichtlich, kann das Temperatursensorelement 34 alternativ auch in einem Hohlraum 36 in wenigstens einer der Spulennuten 14 untergebracht sein. Dazu kann das Temperatursensorelement 34 zwischen der Spule 20a einerseits und der Statorwand und/oder einem der Polhörner 16 andererseits angeordnet sein.

Eine weitere Besonderheit der vorliegenden Erfindung ist darin zu sehen, dass die beiden Drahtenden bzw. Drahtendabschnitte 22a, 22b, welche beim Wickelvorgang von der Spule 20a an den Statorhälften 12 entstehen, wie vorstehend erwähnt als Anschlussdrähte bzw. elektrische Anschlüsse des Elektromotors genutzt werden können. Hierfür werden die Drahtenden 22a, 22b in ausreichend großer Länge aus der Spule 20a herausgeführt, um die Funktion von aus dem Stand der Technik bekannten separaten Litzen zu übernehmen und einen Anschluss der Spule 20a an eine Stromquelle oder einen Stromverteiler (nicht gezeigt) zu ermöglichen. An den freien Enden der Drahtendabschnitte 22a, 22b können separate Anschlusselemente, beispielsweise in der Form einer Crimpkralle (nicht dargestellt) in der Weise befestigt werden, dass diese die isolierende Außenschicht (im dargestellten Beispiel eine isolierende Grundschicht sowie eine darauf aufgebrachte Backlackschicht) des Spulendrahts 20 durchdringen und eine elektrische Kontaktierung der Spule ermöglichen. Die Anschlusselemente (nicht dargestellt) können zudem in ihrer Außengeometrie in der Art eines Steckers ausgebildet sein, der in einen korrespondierenden Steckverbinder an der Stromquelle bzw. dem Stromverteiler des elektrischen Antriebs eingesteckt werden kann.

Nachfolgend wird der Herstellungsprozess eines zweipoligen Stators unter Bezugnahme auf die Figuren beschrieben:
Aus einem durch Stanzpaketieren von identischen Blechlamellen hergestellten Blechpaket werden die beiden Statorhälften 12 in Anlage zueinander ausgestanzt, die in einem weiteren Prozessschritt mit Kupferdraht bewickelt werden sollen.

Um im Betrieb eine ausreichende elektrische Isolation gewährleisten und ausreichend große Abstände zwischen der Spule und aktiven Teilen des Elektromotors bereitstellen zu können, wird, bevor die Statorhälften 12 bewickelt werden, Isolierpapier 30 in die Nuten 14 der jeweiligen Statorhälften 12 eingelegt.

Um zu gewährleisten, dass das Isolierpapier 30 relativ zu der jeweiligen Statorhälfte 12, in deren Nut 14 das Isolierpapier 30 eingelegt wird, fixiert ist, können die Statorhälften 12 in einem vorgeschalteten Prozessschritt vor dem Einlegen des Isolierpapiers 30 in die zugehörigen Nuten 14 zumindest in dem Bereich der Nuten erwärmt werden, beispielsweise auf eine Temperatur von wenigstens 150° Celsius. Das Isolierpapier 30 ist auf derjenigen Seite, mit der es in Anlage an die erwärmte Nut 14 der Statorhälften 12 kommen soll, zumindest abschnittsweise mit einem Backlack beschichtet. Das eingelegte Isolierpapier 30 kann dann, sobald es in die zugehörige Nut 14 eingelegt ist, für einige Sekunden an die Nutinnenseiten angepresst werden. Dabei schmilzt die Backlackbeschichtung an dem Isolierpapier 30 an und verklebt dieses mit der Statorhälfte 12. Eine Fixierung des Isolierpapiers 30 bei dem nachfolgenden Prozessschritt des Bewickelns ist folglich nicht mehr notwendig.

Das eingelegte Isolierpapier 30 weist dabei, wie bereits vorstehend beschrieben, einen radialen Überstand 32 über die Polspitzen 16 der jeweiligen Statorhälften 12 hinaus auf.
Dieser Überstand 32 kann während des nachfolgenden Wickelvorgangs zusätzlich nach radial innen gezogen werden, um während des Bewickelns sicherzustellen, dass das Isolierpapier 30 nicht durch den Spulendraht 20 geknickt wird.

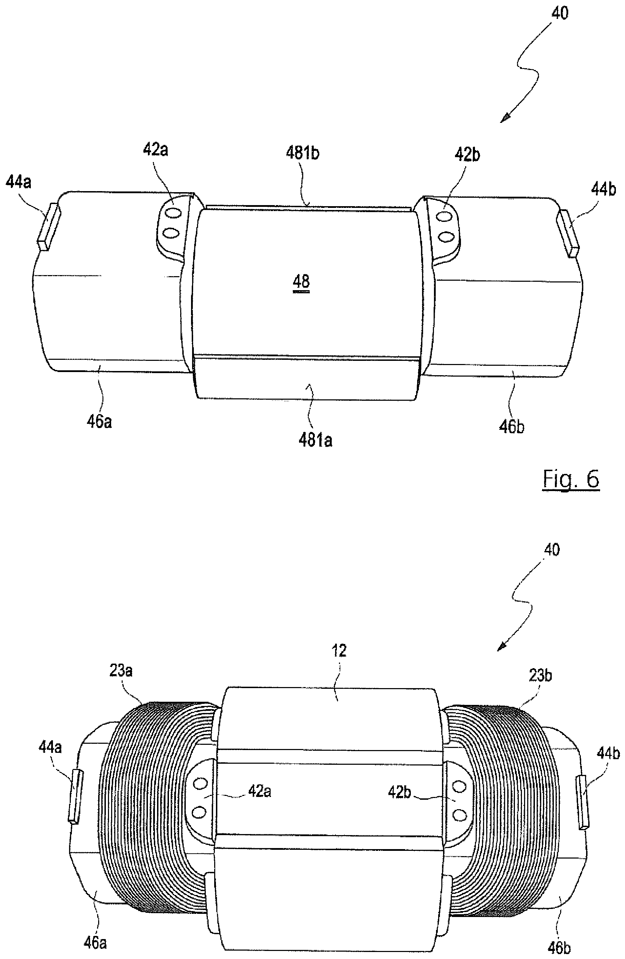

In einem weiteren Schritt wird jede der Statorhälften 12 automatisiert mit Hilfe eines Wickelarms mit dem Spulendraht 20 bewickelt. Um eine Bewicklung der Statorhälften 12 zu erreichen, bei der der Füllgrad der Spulennut 14 über 100 % liegt, kann eine wie in Fig. 6 dargestellte Wickelschablone 40 verwendet werden. Die Wickelschablone 40 zeigt dabei ein näherungsweise halbzylindrisches Mittelstück 48, an dessen Stirnseiten jeweils die beiden von diesem am Umfang etwas abgesetzten Schablonenenden 46a und 46b angeordnet sind. Dabei ist das Mittelstück 48 dazu vorgesehen, von der Innenseite her auf eine Statorhälfte 12 aufgesetzt zu werden, wobei es mittels der Schablonenenden 46a und 46b auf dieser in Axialrichtung zentriert wird. Das Mittelstück 48 zeigt dabei die Anlagenflächen 481a und 481b, welche bei eingesetzter Wickelschablone 40 über die Polhörner der Statorhälfte überstehen und so eine zusätzliche temporäre Nut schaffen, in welcher der Spulendraht 20 gewickelt werden kann, wobei er dort während und nach dem Wickelvorgang mittels der Wickelschablone 40 in dieser temporären Nut geführt und gehalten wird.

Ferner zeigt die in Fig. 6 dargestellte Wickelschablone 40 auf ihren Schablonenenden 46a und 46b jeweils einen äußeren Fortsatz 44a, 44b und einen inneren Fortsatz 42a, 42b. Zwischen den Fortsätzen 42a und 44a bzw. 42b und 44b kann beim Wickelvorgang der Spulendraht 20 ebenfalls geführt bzw. angeordnet werden, so dass sich über die Statorhälfte 12 hinausstehend ein Wickelkopf mit einer definierten Form ergibt. Im Unterschied zum Stand der Technik kann also durch die Verwendung der Wickelschablone 40 einerseits erreicht werden, dass auch Bereiche außerhalb der Nut 14 mit Spulendraht 20 gefüllt werden und andererseits auch, dass eine definierte Form eines Wickelkopfes geschaffen werden kann.

Fig. 7 zeigt in einer Ansicht von der Außenseite her die in der Statorhälfte 12 eingesetzte Wickelschablone 40 nach dem Wickelvorgang. Gut erkennbar ist die definierte Ausbildung der Wickelköpfe 23a, b, welche durch die Fortsätze 42a, 44a und 42b, 44b erreicht werden kann. Ansonsten entsprechen die in der Fig. 7 verwendeten Bezugszeichen den bereits in der Fig. 6 verwendeten.

Bevor diese Schablone wieder entnommen wird, um den Statorkörper weiteren Fertigungsschritten zuzuführen, wird die Spule 20a mindestens teilweise verbacken bzw. "angebacken". Aus diesem Grund wird bei dem vorliegenden Herstellungsprozess ein Backlackdraht als Spulendraht 20 verwendet, d.h. ein Kupferdraht mit einer temperaturfesten Grundisolation und einer zusätzlichen Backlack-Deckschicht, welche bei Temperaturen von etwa 150°C bis 200°C erweicht und aushärtet, so dass die einzelnen Spulenwindungen der Spule 20a von dem ausgehärteten Backlack zumindest für die nachfolgenden Handhabungsschritte während der Fertigung in einem Verbund miteinander gehalten werden. Um den Backlack entsprechend zu erwärmen, wird Strom in die Spule 20a eingeleitet, so dass diese sich infolge ihres elektrischen Widerstands auf die gewünschte Temperatur (etwa 150°C bis 200°C) erhitzt. Für eine vorläufige Stabilisierung der Spule 20a genügt ein Stromfluss von ca. 50A für einen Zeitraum für ca. 4s, wodurch die Taktzeiten der Fertigung gering gehalten werden können. In diesem Verfahrensschritt, in dem die einzelnen Drahtwindungen zu einer Spule 20a verbacken werden, kann auch der Überstand 32 des Isolierpapiers 30 an die Spule 20a angebacken werden. Dabei kann das Isolierpapier 30 hierfür ebenfalls eine Backlackbeschichtung zumindest im Bereich seines Überstands 32 auf der der Spule 20a zugewandten Seite aufweisen.

Alternativ ist es jedoch ebenfalls denkbar, das Isolierpapier direkt an der Backlackbeschichtung des Spulendrahtes oder mit Hilfe eines separat aufzubringenden Beschichtungsmittels an der Spule zu verbacken. Weiterhin ist auch denkbar, ein anderes Beschichtungsmittel bzw. eine andere Deckschicht als Backlack zur Fixierung der Spulenwindungen aneinander einzusetzen.

Ein nicht dargestelltes Platzhalterelement, insbesondere ein Stift oder dergleichen kann in den Bereich des Spulenraums in der Weise eingelegt werden, dass sich beim automatisierten Einlegen des Spulendrahts 20 in den Spulenraum der durch das Platzhalterelement begrenzte Hohlraum 36 in der Wicklungsstruktur der Spule 20a oder in wenigstens einer der Spulennuten 14 ergibt. Nach dem Entfernen des Platzhalterelements aus der Wicklungsstruktur der Spule 20a oder aus der wenigstens einen Spulennut 14 kann in den verbleibenden Hohlraum 36 das Temperatursensorelement 34 eingeführt werden.

Die Wickelschablone 40 ist beispielsweise derart ausgebildet, dass in einem Bereich der gewickelten Spule 20a die entsprechende Ausnehmung bzw. der Hohlraum 36 verbleibt, in den in einem weiteren Prozessschritt das Temperatursensorelement 34 in die gewickelte Spule 20a eingeführt werden kann. Alternativ kann das von der Wickelschablone separate Platzhalterelement verwendet werden. Das Temperatursensorelement 34 wird in dem wenigstens einen Hohlraum 36 der Spule 20a fixiert. Dies kann mittels des Fixiermittels für den Spulendraht 20 erfolgen. Alternativ ist es jedoch ebenfalls denkbar, das Temperatursensorelement 34 direkt an der Backlackbeschichtung des Spulendrahts 20 zu verbacken oder mit Hilfe eines zusätzlichen separat aufzubringenden Sensorfixiermittels an der Spule 20a zu fixieren. Dazu kann das Temperatursensorelement 34 wenigstens teilweise mit dem Sensorfixiermittel beschichtet werden. Das Platzhalterelement und damit auch der Hohlraum 36 kann im Bereich des Wickelkopfes 23a, b oder in einer der Spulennuten 14 zwischen der Spule 20a einerseits und der Statorwand und/oder einem der Polhörner 16 andererseits vorgesehen werden. Das zusätzliche Sensorfixiermittel kann z. B. Klebstoff, Träufelharz oder Backlack umfassen.

Darüber hinaus kann ein vorstehend genanntes Platzhalterelement in den Bereich des Spulenraums in der Weise eingelegt werden, dass sich beim automatisierten Einlegen des Spulendrahts 20 in den Spulenraum ein nicht dargestellter, durch das Platzhalterelement begrenzter, Hohlraum im Bereich der Endabschnitte 22a, 22b in der Wicklungsstruktur der Spule 20a ergibt. Nach dem Entfernen des Platzhalterelements aus der Wicklungsstruktur der Spule 20a kann der Schrumpfschlauch 24 auf das jeweilige Drahtende 22a, 22b aufgebracht und in den verbleibenden Hohlraum in der Wicklungsstruktur der Spule 20a eingeführt werden. Anschließend wird der Schrumpfschlauch 24 mittels eines Schlauchfixiermittels in der Wicklungsstruktur der Spule 20a fixiert. Das Schlauchfixiermittel kann Klebstoff oder Träufelharz, vorzugsweise ein dual härtendes Harz umfassen.

Schließlich können die Anschlusselemente an den freien Enden der Drahtendabschnitte 22a, 22b befestigt werden, wobei diese bevorzugt nicht nur an den Drahtendabschnitten 22a, 22b angreifen, sondern im befestigten Zustand auch den Schrumpfschlauch 24 durchdringen, um auf diese Weise eine optimale Isolation und Schutzwirkung zum Schutz der Drahtendabschnitte 22a, 22b bereitstellen zu können.

Nachdem die beiden Statorhälften 12 auf diese Weise hergestellt und bewickelt sind, werden diese miteinander verbunden, um gemeinsam den Statorkörper zu bilden. Hierzu werden die beiden Statorhälften 12 im Bereich ihrer Verbindungsstellen 18 aneinander angelegt, wobei jeweils eine erste Verbindungsstelle 18a einer Statorhälfte 12 in Anlage mit einer zweiten Verbindungsstelle 18b der jeweils anderen Statorhälfte 12 gebracht wird.

Die beiden aneinander anliegenden Statorhälften 12 können in einem weiteren Schritt mittels Tauchimprägnierung aneinander fixiert werden. Hierzu können die beiden aneinander anliegenden Statorhälften 12 bzw. die aufgewickelte Spule 20a erwärmt und in ein Tauchbad, insbesondere mit dual härtendem Harz (Träufelharz bzw. Dualharz) eingetaucht werden, welches sowohl unter Wärmeeinwirkung als auch unter UV-Licht aushärtet. Aufgrund der Kapillarwirkung der Zwischenräume zwischen den einzelnen Windungen der Spule 20a wird diese weitgehend von dem Träufelharz durchsetzt. Dadurch, dass die Spule 20a erwärmt wird, kann das Harz an der Spule 20a und insbesondere auch im Inneren der Spule 20a zwischen den Windungen bereits während des Tauchvorgangs aushärten, wodurch die gesamten Spule 20a mechanisch soweit stabilisiert werden kann, dass sie der mechanischen Beanspruchung im späteren Einsatz standhält. In den Außenbereichen des Stators 10, die nicht die gleiche Temperatur wie die Spule 20a haben, kann im Fall der Verwendung eines Dualharzes das Harz in einem weiteren Schritt mittels UV-Licht ausgehärtet werden.

Die Tauchimprägnierung dient nicht nur als zusätzlicher Schutz des gesamten Statorkörpers vor Abrasion, sondern auch als Statorfixiermittel zur stoffschlüssigen Verbindung der Statorhälften 12 miteinander. Grundsätzlich ist es jedoch auch denkbar, vor dem Schritt der Tauchimprägnierung die beiden Statorhälften beispielsweise durch Kleben, Schweißen oder Löten oder dergleichen stoffschlüssig miteinander zu verbinden. Dabei ist sowohl denkbar, nur einzelne Fixierungspunkte anzubringen, als auch eine Verbindungsnaht entlang der Verbindungsstellen 18 vorzusehen, um die Statorhälften während der Tauchimprägnierung in ihrer relativen Lage zueinander zu halten.

Das Statorfixiermittel, d.h. in dem beschriebenen Fall das Dualharz kann auch als Schlauchfixiermittel dienen bzw. als Sensorfixiermittel.

Die vorstehend beschriebene Tauchimprägnierung ist äußerst vorteilhaft, da diese eine Beschichtung von Spule und Statorkörper sowie das Fixieren der Statorhälften aneinander in einem einzigen Prozessschritt ermöglicht. Weiterhin wird durch die verwendete Tauchimprägnierung sichergestellt, dass der Stator ein in sich sowohl elektrisch optimal isoliertes als auch gegen Abrasion geschütztes Gesamtsystem bildet. Das vorstehend beschriebene teilweise Verbacken bzw. Anbacken der Spulenwindungen kann durch die Kombination mit dem weiteren Prozessschritt des Tauchimprägnierens innerhalb eines Zeitfensters von etwa 3 Sekunden vorgenommen werden, da hierdurch die Windungen der Spule nur relativ zu einander in dem Maße gesichert werden müssen, dass die Wickelschablone entnommen werden kann. Die in einem weiteren Prozessschritt vorgenommene Tauchimprägnierung sichert die ausreichende Stabilität der Spule im Betrieb des elektrischen Antriebs. Wollte man die Spule nur durch Verbacken der Backlackbeschichtung des Spulendrahtes fixieren, wären höhere Backzeiten in der Wickelmaschine notwendig, was insgesamt die Taktzeit bei der Herstellung unvorteilhaft erhöhen würde.

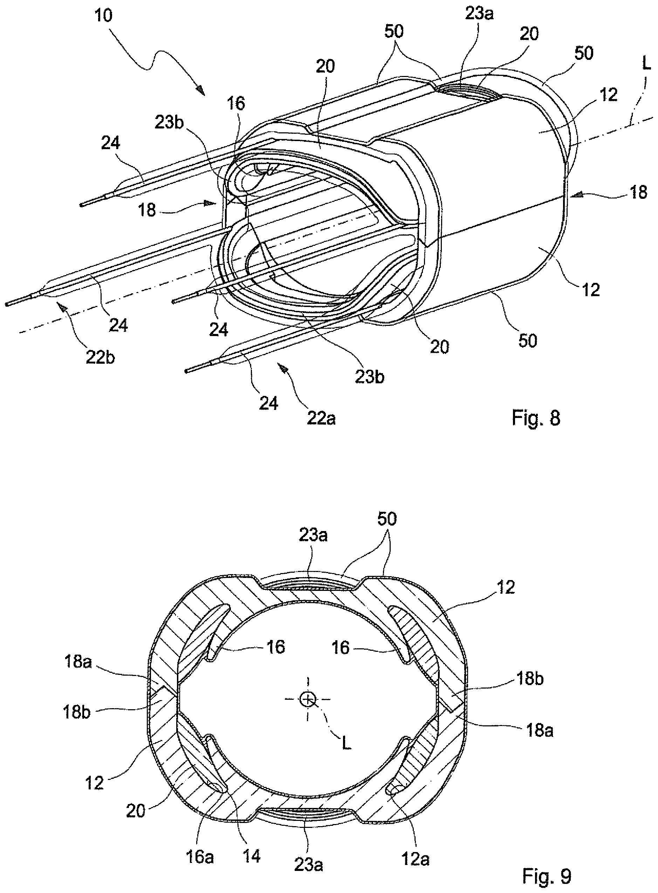

In den Figuren 8 und 9 ist ein Stator 10 gezeigt, welcher wie vorstehend beschrieben mittels einer Tauchimprägnierung beschichtet wurde. Grundsätzlich sind auch andere Beschichtungsverfahren zur Erzeugung des beschichteten Stators 10 wie bspw. Besprühen denkbar. Die in den Figuren 8 und 9 verwendeten Bezugszeichen entsprechen weitgehend den bereits in den Figuren 1 und 2 verwendeten.

Fig. 8 zeigt in einer isometrischen Ansicht einen Stator 10, bei welchem die Wickelköpfe 23a und 23b mit der gemeinsamen Beschichtung 50 versehen sind. Gut erkennbar in Fig. 8 ist, dass die gemeinsame Beschichtung 50 im vorliegend gezeigten Ausführungsbeispiel den Statorkörper an seiner Innen- und Außenseite sowie die Wickelköpfe 23a und 23b wie auch die mit dem Schrumpfschlauch 24 versehenen Drahtenden 22a, 22b bedeckt. Es wird also im vorliegenden Ausführungsbeispiel über den gesamten Stator 10 hinweg eine durchgängige Beschichtung 50 ausgebildet, welche sämtliche Komponenten wirksam schützt und aufgrund ihrer Ausbildung als gemeinsame Beschichtung keine harten Absätze oder Übergänge ausbildet, an welchen abrasiv wirkende Partikel in der vorbeiströmenden Luft angreifen könnten.

Fig. 9 zeigt in einem zur Achse L senkrechten Schnitt den Verlauf der Beschichtung 50. Gut erkennbar aus Fig. 9 ist, dass die Beschichtung 50 im Bereich des Statorkörpers etwas dünner ausgebildet ist als im Bereich der Wickelköpfe 23a. Die dickere Beschichtung im Bereich der Wickelköpfe 23a ist insbesondere auch deswegen vorteilhaft, weil diese in der Regel am stärksten einem abrasiv wirkenden Partikelstrom in der Kühlluft ausgesetzt sind.

Der in den Figuren 8 und 9 gezeigte Stator 10 kann nachfolgend in ein Motorgehäuse (nicht gezeigt) eingesetzt werden.

## Patentansprüche

1. Verfahren zum automatisierten Einlegen von Draht (20) in Form von wenigstens einer Spule (20a) in einen Spulenraum eines Stators (10), wobei das Einlegen des Spulendrahts (20) automatisiert mithilfe eines rotierenden Wickelarms erfolgt, wobei der Spulenraum eine Anzahl von Spulennuten (14) umfasst, die von Polhörnern (16) und Statorwand (12a) des Stators (10) begrenzt werden, wobei ein Isolierpapier (30) vorgesehen wird, um die wenigstens eine Spule (20a) vor Abrasion zu schützen,
**gekennzeichnet durch** die folgenden Schritte:
- Einlegen des Isolierpapiers (30) in den Spulenraum in der Weise, dass das Isolierpapier (30) aus der jeweiligen Spulennut (14) heraus in einer Richtung senkrecht zu der Längsachse (L) des Stators (10) über das jeweilige Polhorn (16) vorsteht,
- Einlegen des Spulendrahts (20) in den Spulenraum,
- Fixieren einzelner Windungen des Spulendrahts (20) mittels eines Fixierungsmittels aneinander, wobei der Spulendraht (20) eine Backlackbeschichtung als Fixierungsmittel aufweist, mittels der einzelne Drahtwindungen zu einer Spule (20a) verbacken werden, und
- Fixieren des senkrecht zu der Längsachse (L) des Stators (10) überstehenden Teils des Isolierpapiers (30) an der Spule (20a), wobei der senkrecht zu der Längsachse (L) des Stators (10) überstehende Teil des Isolierpapiers (30) an der Spule (20a) angebacken wird.

2. Verfahren nach Anspruch 1,
**dadurch gekennzeichnet, dass** das Isolierpapier (30) in einem Bereich von wenigstens 2 mm, vorzugsweise in einem Bereich 5 mm - 15 mm, aus der jeweiligen Spulennut heraus über das jeweilige Polhorn (16) vorsteht.

3. Verfahren nach einem der Ansprüche 1 oder 2,
**dadurch gekennzeichnet, dass** während des Einlegens des Spulendrahts (20) in den Spulenraum der vorstehende Abschnitt (32) des Isolierpapiers (30) nach radial innen gezogen wird, um das Einlegen des Spulendrahts (20) nicht zu behindern.

4. Verfahren nach einem der Ansprüche 1 bis 3,
**dadurch gekennzeichnet, dass** das Fixierungsmittel auf den eingelegten Spulendraht (20) aufgebracht wird und das Isolierpapier (30) in Anlage an dem Fixierungsmittel an dem eingelegten Spulendraht (20) fixiert wird.

5. Verfahren nach Anspruch 3,
**dadurch gekennzeichnet, dass** das Isolierpapier (30) wenigstens teilweise mit dem Fixierungsmittel beschichtet wird.

6. Verfahren nach einem der Ansprüche 1 bis 5,
**dadurch gekennzeichnet, dass** das Isolierpapier (30) ebenfalls eine Backlackbeschichtung zumindest im Bereich seines Überstands (32) auf der der Spule (20a) zugewandten Seite aufweist.

7. Verfahren nach einem der Ansprüche 1 bis 6,
**dadurch gekennzeichnet, dass** der Stator (10) wenigstens zwei im Querschnitt betrachtet segmentförmige Teile (12) umfasst und dass in jedes der Statorsegmente (12) Isolierpapier (30) sowie ein Spulendraht (20) eingelegt werden, wobei in einem weiteren Schritt die Statorsegmente (12) miteinander verbunden werden, wobei vorzugsweise die Statorsegmente (12) mit einem zusätzlichen Verbindungsmittel stoffschlüssig miteinander verbunden werden, wobei das zusätzliche Verbindungsmittel Klebstoff, Träufelharz oder Backlack umfassen kann.

8. Stator (10) eines elektrischen Antriebs, wobei der Stator (10) umfasst:
- einen Statorkörper mit einem Spulenraum zur Aufnahme eines Drahts (20) in Form von wenigstens einer Spule (20a), wobei der Spulenraum mehrere Spulennuten (14) umfasst, die von der Statorwand (12a) und Polhörnern (16) des Stators (10) begrenzt werden,
- Isolierpapier (30) zum Schutz des Spulendrahtes (20) vor Abrasion, sowie
- den in den Spulenraum eingelegten Spulendraht (20), wobei der Spulendraht (20) eine Backlackbeschichtung aufweist und einzelne Drahtwindungen zu einer Spule (20a) verbacken werden
**dadurch gekennzeichnet, dass** das in eine der Spulennuten (14) eingelegte Isolierpapier (30) aus der jeweiligen Spulennut (14) heraus in einer Richtung senkrecht zu der Längsachse (L) des Stators (10) über das jeweilige Polhorn (16) vorsteht und der in einer Richtung senkrecht zu der Längsachse (L) des Stators (10) vorstehende Teil des Isolierpapiers (30) an der Spule (20a) angebacken wird.

9. Zweipoliger Stator (10) eines elektrischen Antriebs nach Anspruch 8 der mit dem Verfahren gemäß eines der Ansprüche 1 bis 7 hergestellt ist.

10. Vorrichtung zur Herstellung eines Stators (10) gemäß Anspruch 9, umfassend einen Vorrichtung zum Einlegen von Isolierpapier (30) in den Spulenraum (20),
**dadurch gekennzeichnet, dass** die Vorrichtung dazu angepasst ist, dass beim Einlegen des Isolierpapiers (30) sichergestellt ist, dass das Isolierpapier (30) aus der jeweiligen Spulennut (14) heraus in einer Richtung senkrecht zu der Längsachse (L) des Stators (10) über das jeweilige Polhorn (16) vorsteht, dass beim Fixieren einzelner Windungen des Spulendrahts (20) mittels eines Fixierungsmittels aneinander, der Spulendraht (20) eine Backlackbeschichtung als Fixierungsmittel aufweist, mittels der einzelne Drahtwindungen zu einer Spule (20a) verbacken werden, und dass beim Fixieren des senkrecht zu der Längsachse (L) des Stators (10) überstehenden Teils des Isolierpapiers (30) an der Spule (20a), der senkrecht zu der Längsachse (L) des Stators (10) überstehende Teil des Isolierpapiers (30) an der Spule (20a) angebacken wird.

## Claims

1. Method for automatically inserting wire (20) in the form of at least one coil (20a) into a coil space of a stator (10), wherein the insertion of the coil wire (20) is realized in an automated manner with the aid of a rotating winding arm, wherein the coil space comprises a number of coil grooves (14) which are delimited by pole tips (16) and a stator wall (12a) of the stator (10), wherein provision is made of insulation paper (30) in order to protect the at least one coil (20a) from abrasion,
**characterized by** the following steps:
- inserting the insulation paper (30) into the coil space in such a way that the insulation paper (30) projects beyond the respective pole tip (16) from the respective coil groove (14) in a direction perpendicular to the longitudinal axis (L) of the stator (10),
- inserting the coil wire (20) into the coil space,
- fixing individual windings of the coil wire (20) to one another by means of a fixing means, wherein the coil wire (20) has as a fixing means a baking enamel coating by means of which individual wire windings are baked to form a coil (20a), and
- fixing to the coil (20a) that part of the insulation paper (30) which overhangs perpendicular to the longitudinal axis (L) of the stator (10), wherein that part of the insulation paper (30) which overhangs perpendicular to the longitudinal axis (L) of the stator (10) is baked on the coil (20a).

2. Method according to Claim 1,
**characterized in that** the projection of the insulation paper (30) beyond the respective pole tip (16) from the respective coil groove is in a region of at least 2 mm, preferably in a region of 5 mm - 15 mm.

3. Method according to either of Claims 1 and 2,
**characterized in that**, during the insertion of the coil wire (20) into the coil space, the projecting portion (32) of the insulation paper (30) is pulled radially inwards in order not to impede the insertion of the coil wire (20).

4. Method according to one of Claims 1 to 3,
**characterized in that** the fixing means is applied to the inserted coil wire (20), and the insulation paper (30) is fixed to the inserted coil wire (20) so as to bear against the fixing means.

5. Method according to Claim 3,
**characterized in that** the insulation paper (30) is coated at least partially with the fixing means.

6. Method according to one of Claims 1 to 5,
**characterized in that** the insulation paper (30) likewise has a baking enamel coating at least in the region of its overhang (32) on the side facing the coil (20a).

7. Method according to one of Claims 1 to 6,
**characterized in that** the stator (10) comprises at least two parts (12) which, viewed in cross section, are segment-shaped, and **in that** insulation paper (30) and a coil wire (20) are inserted into each of the stator segments (12), wherein, in a further step, the stator segments (12) are connected to one another, wherein preferably the stator segments (12) are connected to one another in a materially bonded manner by an additional connecting means, wherein the additional connecting means may comprise adhesive, impregnating resin or baking enamel.

8. Stator (10) of an electric drive, wherein the stator (10) comprises:
- a stator body with a coil space for receiving a wire (20) in the form of at least one coil (20a), wherein the coil space comprises multiple coil grooves (14) which are delimited by the stator wall (12a) and pole tips (16) of the stator (10),
- insulation paper (30) for protecting the coil wire (20) from abrasion, and
- the coil wire (20) inserted into the coil space, wherein the coil wire (20) has a baking enamel coating, and individual wire windings are baked to form a coil (20a),
**characterized in that** the insulation paper (30), which is inserted into one of the coil grooves (14), projects beyond the respective pole tip (16) from the respective coil groove (14) in a direction perpendicular to the longitudinal axis (L) of the stator (10), and that part of the insulation paper (30) which projects in a direction perpendicular to the longitudinal axis (L) of the stator (10) is baked on the coil (20a).

9. Two-pole stator (10) of an electric drive according to Claim 8, which is produced by way of the method according to one of Claims 1 to 7.

10. Device for producing a stator (10) according to Claim 9, comprising a device for inserting insulation paper (30) into the coil space (20),
**characterized in that** the device is adapted such that, when the insulation paper (30) is inserted, it is ensured that the insulation paper (30) projects beyond the respective pole tip (16) from the respective coil groove (14) in a direction perpendicular to the longitudinal axis (L) of the stator (10), such that, when individual windings of the coil wire (20) are fixed to one another by means of a fixing means, the coil wire (20) has as a fixing means a baking enamel coating by means of which individual wire windings are baked to form a coil (20a), and such that, when that part of the insulation paper (30) which overhangs perpendicular to the longitudinal axis (L) of the stator (10) is fixed to the coil (20a), that part of the insulation paper (30) which overhangs perpendicular to the longitudinal axis (L) of the stator (10) is baked on the coil (20a).

## Revendications

1. Procédé pour la pose automatisée de fil (20) en forme d'au moins une bobine (20a) dans une chambre de bobine d'un stator (10), la pose du fil de bobine (20) s'effectuant de manière automatisée au moyen d'un bras de bobinage tournant, la chambre de bobine comportant une pluralité de rainures de bobine (14) délimitées par des cornes polaires (16) et la paroi de stator (12a) du stator (10), un papier isolant (30) étant prévu pour protéger l'au moins une bobine (20a) de l'abrasion, **caractérisé par** les étapes suivantes :
- mise en place du papier isolant (30) dans la chambre de bobine de sorte que le papier isolant (30) fasse saillie hors de la rainure de bobine (14) correspondante, dans une direction perpendiculaire à l'axe longitudinal (L) du stator (10), en dépassant de la corne polaire (16) correspondante,
- mise en place du fil de bobine (20) dans la chambre de bobine,
- fixation de spires individuelles du fil de bobine (20) les unes aux autres au moyen d'un moyen de fixation, le fil de bobine (20) comportant un moyen de fixation sous la forme d'un revêtement thermo-adhérent au moyen duquel des spires de fil individuelles sont cuites pour former une bobine (20a), et
- fixation à la bobine (20a) de la partie du papier isolant (30) dépassant perpendiculairement à l'axe longitudinal (L) du stator (10), la partie du papier isolant (30) dépassant perpendiculairement à l'axe longitudinal (L) du stator (10) étant cuite sur la bobine (20a).

2. Procédé selon la revendication 1,
**caractérisé en ce que** le papier isolant (30) fait saillie hors de la rainure de bobine correspondante en dépassant de la corne polaire correspondante (16) d'une longueur d'au moins 2 mm, de préférence d'une longueur de 5 mm - 15 mm.

3. Procédé selon l'une des revendications 1 ou 2,
**caractérisé en ce que**, lors de la mise en place du fil de bobine (20) dans la chambre de bobine, la partie dépassante (32) du papier isolant (30) est tirée dans la direction radiale vers l'intérieur pour ne pas gêner la mise en place du fil de bobine (20).

4. Procédé selon l'une des revendications 1 à 3,
**caractérisé en ce que** le moyen de fixation est appliqué sur le fil de bobine (20) mis en place et **en ce que** le papier isolant (30) est fixé, en appui sur le moyen de fixation, sur le fil de bobine (20) mis en place.

5. Procédé selon la revendication 3,
**caractérisé en ce que** le papier isolant (30) est revêtu au moins en partie avec le moyen de fixation.

6. Procédé selon l'une des revendications 1 à 5,
**caractérisé en ce que** le papier isolant (30) comporte aussi un revêtement thermo-adhérent au moins dans la zone de son dépassement (32), sur le côté orienté vers la bobine (20a).

7. Procédé selon l'une des revendications 1 à 6,
**caractérisé en ce que** le stator (10) comprend au moins deux parties (12) ayant une section en forme de segments et **en ce que** du papier isolant (30), ainsi qu'un fil de bobine (20) sont placés dans chacun des segments de stator (12), les segments de stator (12) étant reliés les uns aux autres dans une étape suivante, les segments de stator (12) étant de préférence reliés entre eux par liaison de matière au moyen d'un moyen de liaison supplémentaire, le moyen de liaison supplémentaire pouvant comprendre de la colle, de la résine d'imprégnation ou un produit thermo-adhérent.

8. Stator (10) d'un entraînement électrique, le stator (10) comprenant :
- un corps de stator avec une chambre de bobine pour la réception d'un fil (20) sous la forme d'au moins une bobine (20a), la chambre de bobine comprenant plusieurs rainures de bobine (14) délimitées par la paroi du stator (12a) et des cornes polaires (16) du stator (10),
- du papier isolant (30) pour la protection du fil de bobine (20) contre l'abrasion, ainsi que
- le fil de bobine (20) mis en place dans la chambre de bobine, le fil de bobine (20) comportant un revêtement thermo-adhérent et des spires individuelles du fil étant cuites pour former une bobine (20a)
**caractérisé en ce que** le papier isolant (30) placé dans une des rainures de bobine (14) fait saillie hors de la rainure de bobine (14) correspondante dans une direction perpendiculaire à l'axe longitudinal (L) du stator (10) en dépassant de la corne polaire (16) correspondante et **en ce que** la partie du papier isolant (30) dépassant perpendiculairement à l'axe longitudinal (L) du stator (10) est cuite sur la bobine (20a).

9. Stator (10) à deux pôles d'un moteur électrique selon la revendication 8 fabriqué par le procédé selon l'une des revendications 1 à 7.

10. Dispositif pour la fabrication d'un stator (10) selon la revendication 9 comprenant un dispositif pour la mise en place de papier isolant (30) dans la chambre de bobine (20),
**caractérisé en ce que** le dispositif est agencé pour garantir, lors de la mise en place du papier isolant (30), que le papier isolant (30) fasse saillie hors de la rainure de bobine (14) correspondante dans une direction perpendiculaire à l'axe longitudinal (L) du stator (10) en dépassant de la corne polaire (16) correspondante, **en ce que**, lors de la fixation de spires individuelles du fil de bobine (20) entre elles au moyen d'un moyen de fixation, le fil de bobine (20) comporte un moyen de fixation sous la forme d'un revêtement thermo-adhérent, au moyen duquel des spires individuelles de fil sont cuites pour former une bobine (20a), et **en ce que**, lors de la fixation à la bobine (20a) de la partie du papier isolant (30) dépassant perpendiculairement à l'axe longitudinal (L) du stator (10), la partie du papier isolant (30) dépassant perpendiculairement à l'axe longitudinal (L) du stator (10) est cuite sur la bobine (20a).
